# EUROPÄISCHE PATENTSCHRIFT

(11) **EP 2 203 654 B1**
(45) Veröffentlichungstag und Bekanntmachung des Hinweises auf die Patenterteilung: **08.02.2012**
(21) Anmeldenummer: 08786924.4
(22) Anmeldetag: 06.08.2008
(51) Int. Cl.: F16C 33/60, F16C 43/04

(54) **WÄLZLAGER MIT EINEM GETEILTEN LAGERRING**
ROLLING BEARING WITH A SPLIT BEARING RING
ROULEMENT AVEC UNE BAGUE DE ROULEMENT DIVISÉE

(30) Priorität: 19.09.2007 DE 102007044776
(43) Veröffentlichungstag der Anmeldung: 07.07.2010
(73) Patentinhaber: Schaeffler Technologies GmbH & Co. KG, 91074 Herzogenaurach (DE)
(72) Erfinder: NUISSL, Christian, 90439 Nürnberg (DE); SCHUH, Jörg, 91448 Emskirchen (DE); STÖLZLE, Jürgen, 91056 Erlangen (DE)
(86) Internationale Anmeldenummer: PCT/EP2008/060317
(87) Internationale Veröffentlichungsnummer: WO 2009/037047

(56) Entgegenhaltungen:
- DE-A1- 2 234 984
- US-A- 3 918 776

## Beschreibung

### Gebiet der Erfindung

Die Erfindung betrifft ein Wälzlager mit einem Lagerinnenring und einem Lageraußenring, von denen wenigstens einer als ein Kunststoff-Spritzgussteil ausgebildet ist und mit Wälzkörpern, die auf einer Laufbahn des Lagerinnenrings und auf einer Laufbahn des Lageraußenringes abwälzen, wobei wenigstens einer der Lagerringe in einer achsnormalen Trennebene in zwei formgleiche Ringhälften geteilt ist, die formschlüssig aneinander gehalten sind, wobei über die Trennebene hinausragende, an beiden Ringhälften einstückig angeformte, elastisch ausgebildete Verrastungsglieder mit in beiden Ringhälften angeordneten Freistellungen zusammenwirken.

### Hintergrund der Erfindung

Wälzlager aus Kunststoff für unterschiedliche Anwendungsfälle sind bereits seit längerem bekannt, wie die DE 19 01 381 A, DE 24 50 321 A, DE 68 00 671 U, DE 71 42 627 U, DE 74 07 839 U, DE 94 11 276 U1 und die DE 102 20 419 A1 belegen.

Ein gattungsgemäß ausgebildetes Wälzlager ist aus der DE 22 34 984 A vorbekannt. Wie aus der Beschreibung und aus der einzigen Figur hervorgeht, besteht der innere Lagerring aus zwei formgleichen Ringhälften aus Kunststoff, deren Trennebene achsnormal verläuft. Je wenigstens drei über diese Trennebene hinausgehende Verrastungsglieder sind einstückig mit den Ringteilen hergestellt. Zwischen diesen Verrastungsgliedern ist in jedem Ringteil je eine Ausnehmung vorhanden, die derart bemessen und angeordnet sind, dass die Verrastungsglieder spielfrei in diesen Ausnehmungen liegen, wenn die Ringteile axial zusammengeschoben sind. Die Verrastungsglieder hintergreifen dabei, nach einem Ausweichen aufgrund ihrer Elastizität, mit an ihren freien Enden angebrachten Hakenverrastungsflächen, welche achsnormal in den Ausnehmungen vorgesehen sind, sodass die beiden Ringteile in der Anlage gehalten werden und als eine Einheit den inneren Lagerring bilden.

Nachteilig dabei ist, dass die Rastelemente radiale und axiale Kräfte sowie Kippmomente innerhalb des geteilten Lagerringes aufnehmen müssen. Dies hat zur Folge, dass die Rastelemente einerseits elastisch sein müssen um ein einfaches Einschnappen zu ermöglichen, andererseits aber auch eine hohe Steifigkeit aufweisen müssen, um überhaupt Kräfte aufnehmen zu können. Diese Ausbildung der Rastelemente, d. h. sowohl sehr flexibel als auch sehr steif, ist ein Widerspruch an sich, weil bei einer vergrößerten Ausbildung der Rastelemente in Umfangsrichtung deren Flexibilität beeinträchtigt ist. Es ist weiter von Nachteil, dass die in dieser Vorveröffentlichung beschriebenen Rastelemente ein Spiel zwischen den beiden Innenringhälften nicht ausschließen können, was sich negativ auf die Lageranordnung auswirkt.

### Zusammenfassung der Erfindung

Ausgehend von den Nachteilen des bekannten Standes der Technik liegt der Erfindung daher die Aufgabe zugrunde, den geteilten Lagerring eines gattungsgemäßen Wälzlagers so auszubilden, dass einerseits eine sichere Aufnahme aller auftretenden Lagerkräfte und andererseits ein guter Zusammenhalt der Lageranordnung realisiert ist.

Erfindungsgemäß wird diese Aufgabe nach dem kennzeichnenden Teil von Anspruch 1 in Verbindung mit dessen Oberbegriff dadurch gelöst, dass die Verrastungsglieder an einem radial innen oder radial außen liegenden Ringteil angeformt sind, wobei das Ringteil an einem Teil seiner Umfangsausdehnung von segmentartig und schalenförmig ausgebildeten Vorsprüngen in axialer Richtung überragt wird, die in einer anderen Radialebene angeordnet sind, die Vorsprünge in Umfangsrichtung durch segmentartig ausgebildete Vertiefungen begrenzt sind und die Vorsprünge einer Ringhälfte in die komplementär ausgebildeten Vertiefungen der anderen Ringhälfte eingreifen, sodass sich Vorsprünge und Ringteil in axialer Richtung überdecken und die Verrastungsglieder der einen Ringhälfte in im anderen Ringteil angeordnete Freistellungen eingreifen.

Die Erfindung ermöglicht die Montage beider Ringhälften zu einem Lagerring durch einfaches Einschieben der segmentartigen schalenförmigen Vorsprünge in die segmentartigen Vertiefungen, wobei nach axialer Anlage von Vorsprüngen und Vertiefungen die Verrastungsglieder einschnappen. Auf diese Weise ist eine getrennte Aufnahme von auf das Lager einwirkenden Kräften durch unterschiedliche Lagerteile möglich. Während die radialen Kräfte und die Kippmomente durch Vorsprünge, Ausnehmungen und Ringteile sicher aufgenommen sind, werden die axiale Kräfte durch die Verrastungsglieder aufgenommen. Da die axialen Kräfte an den Gesamtkräften nur einen geringen Betrag ausmachen, können die Verrastungsglieder entsprechend filigran und damit sehr flexibel ausgebildet sein, was sich in vorteilhafter Weise auf den Verrastungsprozess auswirkt. Mit anderen Worten, es ist ein besonders leichtes Einrasten der Verrastungsglieder in die vorgesehenen Ausnehmungen gegeben.

Nach einem weiteren Merkmal gemäß Anspruch 2 ist der Lageraußenring geteilt ausgebildet, wobei das Ringteil jeder Ringhälfte an zwei gegenüberliegenden Umfangsstellen mit Verrastungsgliedern versehen ist, die in die komplementär ausgebildeten Freistellungen der anderen Ringteile eingreifen und wobei beide Ringhälften in Umfangsrichtung um 90° zueinander versetzt angeordnet sind.

Auf diese Weise sind zwei identische Ringhälften geschaffen, die sich durch ein Spritzgießverfahren in einfacher Weise herstellen und auch in einfacher Weise durch axiales Aufeinanderschieben zu einer Einheit verbinden lassen. In diesem Zusammenhang hat es sich nach einem weiteren Merkmal der Erfindung nach Anspruch 3 als zweckmäßig erwiesen, dass jede Ringhälfte mit einem radial nach innen gerichteten Flansch versehen ist, sodass mit dem Lager-innenring eine Spaltdichtung gebildet ist. Der Vorteil liegt darin, dass das Eindringen von Schmutz von außen nach innen in das Lagerinnere verhindert und das Austreten von Schmiermittel aus dem Lagerinneren nach außen verhindert ist.

Nach einem weiteren Merkmal gemäß Anspruch 4 hat es sich als zweckmäßig erwiesen, dass das Wälzlager als ein Vierpunkt-Kugellager ausgebildet ist, dessen Lagerkugeln vollkugelig angeordnet sind. Auf diese Weise ist es möglich die Montage der Gesamtlageranordnung zu vereinfachen, weil aufgrund des fehlenden Lagerkäfigs ein Montageschritt entfallen kann und außerdem wird durch die Vollrolligkeit eine erhöhte Lastaufnahme möglich.

Nach einem anderen zusätzlichen Merkmal gemäß Anspruch 5 sollen beide Ringhälften an ihrer Außenmantelfläche zwischen sich eine elastisch ausgebildete Ummantelung aufnehmen. Diese Ummantelung sorgt dafür, dass ein besonders ruhiger, gedämpfter und somit schwingungsarmer Lauf der Lageranordnung möglich ist. In diesem Fall ist das Wälzlager als eine Laufrolle ausgebildet, deren Außenring rotiert.

Eine weitere Variante der Erfindung geht aus Anspruch 6 hervor. Danach ist vorgesehen, dass der Lagerinnenring geteilt ist, wobei das Ringteil jeder Ringhälfte an zwei gegenüberliegenden Umfangsstellen mit Verrastungsgliedern versehen ist, die in die komplementär ausgebildeten Freistellungen der anderen Ringteile eingreifen, wobei beide Ringhälften in Umfangsrichtung 90° zueinander versetzt angeordnet sind.

Nach einem weiteren Merkmal gemäß Anspruch 7 hat es sich bei einem zweigeteilten Lagerinnenring als vorteilhaft erwiesen, dass jede Ringhälfte mit einem radial nach außen gerichteten Flansch versehen ist, sodass mit einem Lageraußenring eine Spaltdichtung gebildet ist.

Nach einem zusätzlichen weiteren Merkmal nach Anspruch 8 ist es auch als Vorteil anzusehen, dass das Wälzlager als ein zweireihiges Schrägkugellager ausgebildet ist, dessen Lagerkugeln vollkugelig angeordnet sind. Auf diese Weise ist es möglich in beide axiale Richtungen Kräfte sicher aufzunehmen, wobei durch die Vollrolligkeit auch hohe Radialkräfte aufnehmbar sind.

Wie auch beim einreihigen Rillenkugellager ist es bei dem zweireihigen Schrägkugellager von Vorteil, dass nach Anspruch 9 der Lageraußenring mit wenigstens einer Ausnehmung versehen ist, in der ein O-Ring angeordnet ist, der wiederum für ein besonders leisen und schwingungsgedämpften Lauf der Lageranordnung sorgt. Auch in diesem Fall ist das Wälzlager als eine Laufrolle ausgebildet, deren Außenring rotiert.

Es ist nach einem anderen Merkmal gemäß Anspruch 10 vorgesehen, dass das Verrastungsglied einen Haken aufweist, dessen Verrastungsfläche unter einem Winkel < 90° zu einer Lagerachse verläuft und der mit einer gleich geneigten Verrastungsfläche der Freistellung zusammenwirkt. Der Vorteil dieser zusätzlichen Ausführungsvariante liegt darin, dass bei Aufnahme einer Welle die Verrastungsglieder in radialer Richtung nach außen bewegt werden und durch die geneigten Flächen dafür sorgen, dass die beiden Ringhälften in axialer Richtung aufeinander zubewegt werden, was sich vorteilhaft auf die Lagervorspannung auswirkt.

Schließlich sollen nach einem letzten Merkmal der Erfindung nach Anspruch 11 die Wälzkörper aus einem nichtmetallischen Werkstoff gefertigt sein. Denkbar sind in diesem Fall Kunststoffe, Glaswerkstoffe und Keramikwerkstoffe, wobei bei den letztgenannten insbesondere Siliziumnitrid eine bedeutende Rolle spielt. Derartige Wälzkörper sind immer dann erforderlich, wenn antimagnetische Eigenschaften der Lageranordnung verlangt werden.

Weitere Merkmale der Erfindung ergeben sich aus der nachfolgenden Beschreibung und aus den Zeichnungen, in denen zwei Ausführungsbeispiele der Erfindung in vereinfachter Form dargestellt sind.

### Kurze Beschreibung der Zeichnungen

Es zeigen:
- Figur 1: einen Axialschnitt durch ein erfindungsgemäß ausgebildetes zweireihiges Schrägkugellager im Bereich der Verrastungsglieder,
- Figur 1a: eine vergrößerte Darstellung im Bereich der Verrastungsglieder gemäß Figur 1,
- Figur 2: eine perspektivische Darstellung zweier Ringhälften des geteilten Lagerinnenringes mit und ohne Lagerkugeln nach Figur 1, teilweise geschnitten,
- Figur 3: eine perspektivisch Darstellung des Lagers nach Figur 1 in teilmontiertem Zustand, teilweise geschnitten,
- Figur 4: eine perspektivische Darstellung der Lageranordnung nach Figur 1 im komplett montierten Zustand, teilweise geschnitten,
- Figur 5: einen Axialschnitt durch ein erfindungsgemäß ausgebildetes Kugellager mit geteiltem Außenring,
- Figur 6: eine perspektivische Darstellung des geteilten Lageraußenringes von Figur 5 vor und nach dem Verschnappen der Ringhälften und
- Figur 7: eine perspektivische Darstellung der Lageranordnung gemäß Figur 5 einschließlich Lagerkugeln vor dem Verschnappen der Einzelbestandteile.

### Ausführliche Beschreibung der Zeichnungen

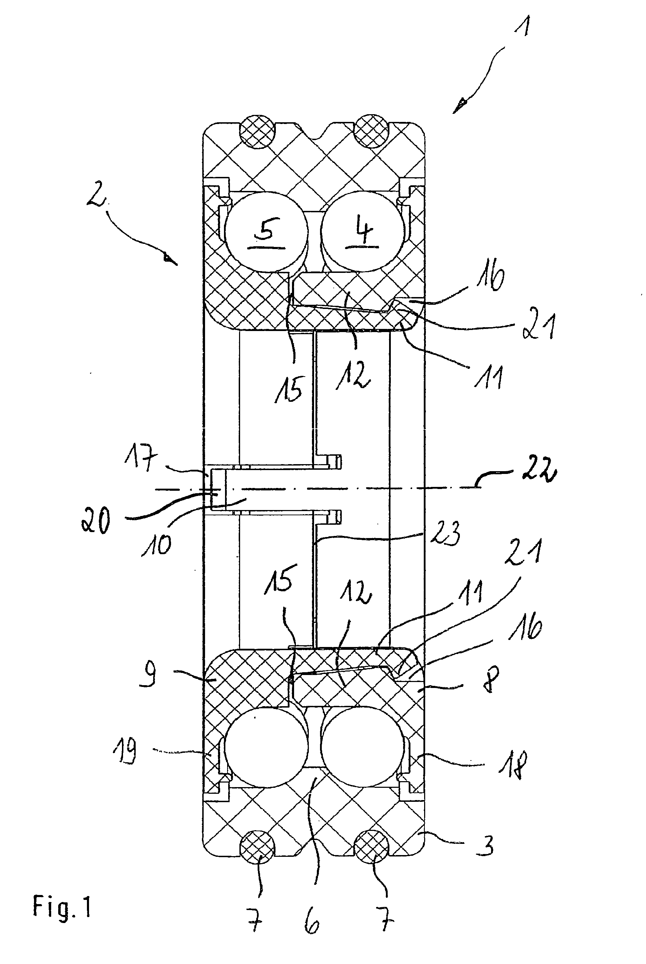

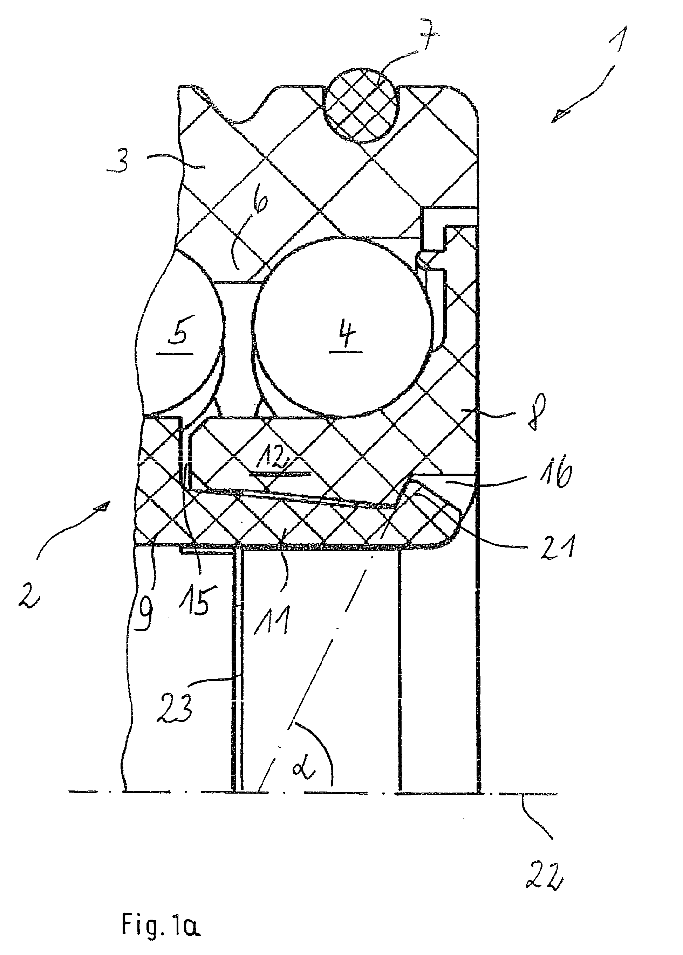

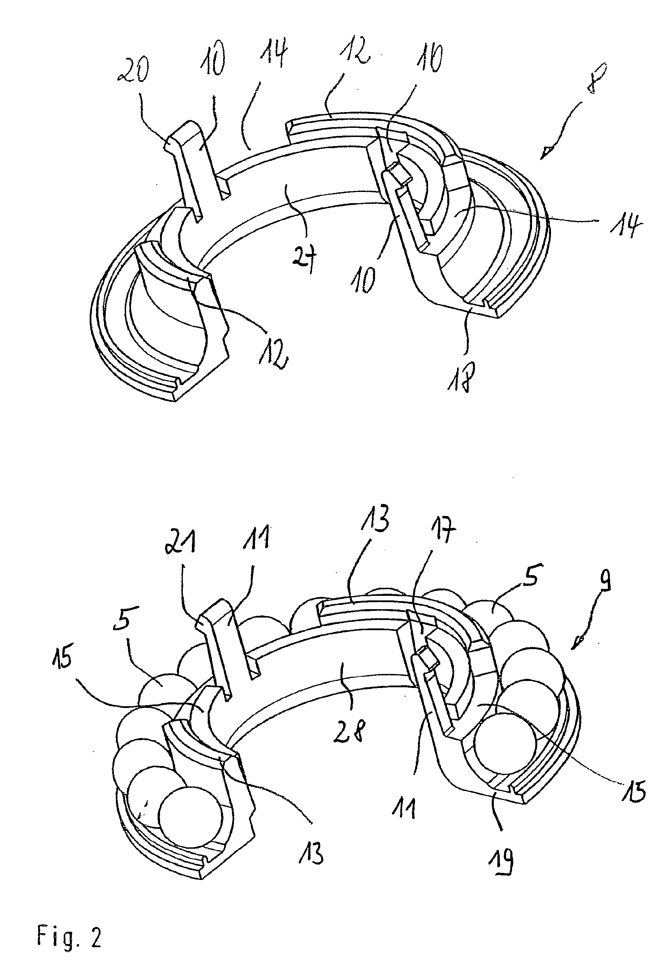

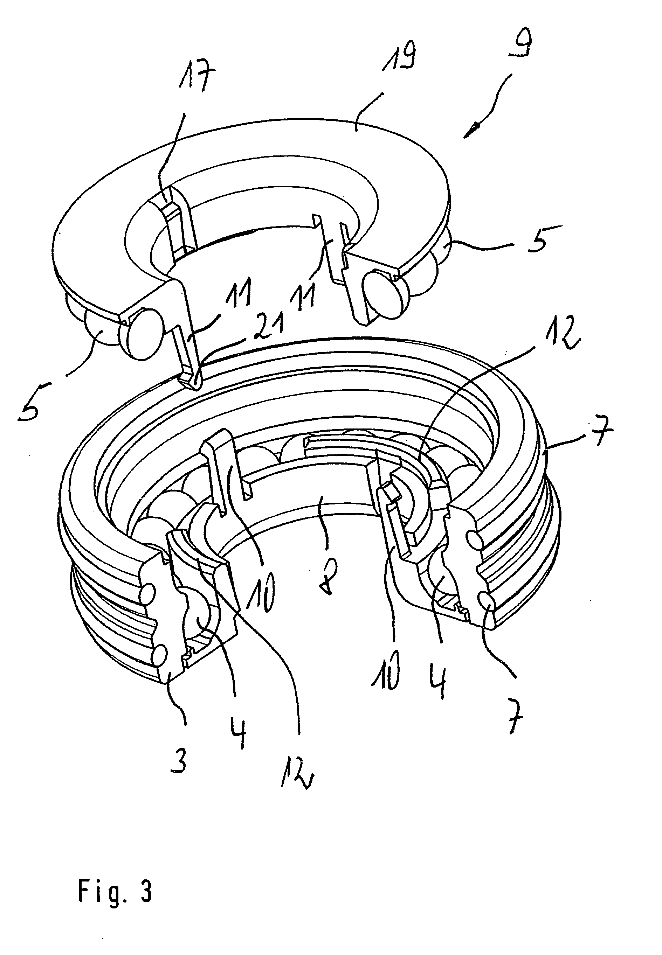

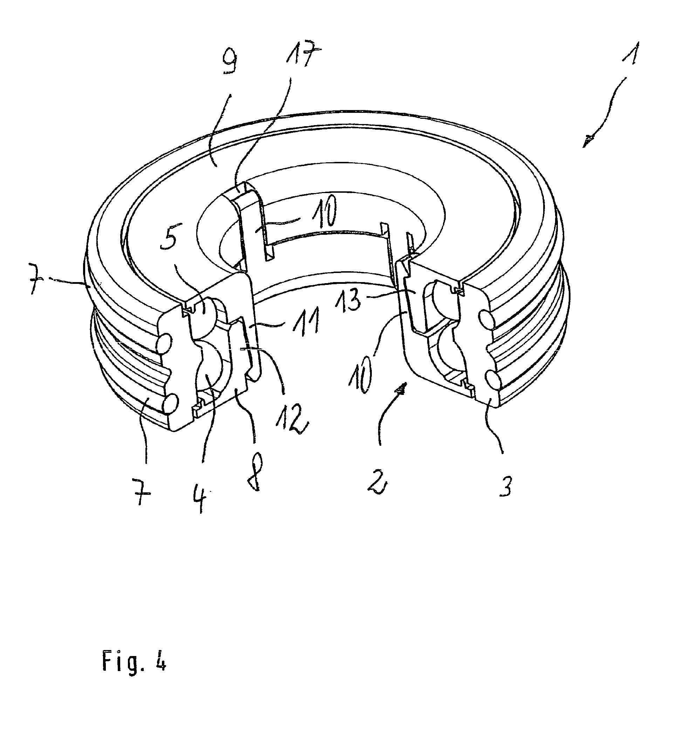

Wie aus den Figuren 1 bis 4, insbesondere aus den Figuren 1 und 1 a erkennbar, besteht das zweireihige Schrägkugellager 1 aus dem zweiteilig ausgebildeten Lagerinnenring 2 und dem einteiligen Lageraußenring 3, zwischen den auf nicht näher bezeichneten Laufbahnen die beiden Kugelreihen 4, 5 abwälzen, deren Lagerkugeln vollkugelig angeordnet sind, wobei die Kugelreihen 4, 5 durch den radial nach innen gerichteten Vorsprung 6 des Lageraußenringes 3 auf Abstand gehalten sind. Der Lageraußenring 3 weist nicht näher bezeichnete in axialer Richtung voneinander beabstandete Ausnehmungen auf, in denen zwei elastische O-Ringe 7 angeordnet sind.

Wie weiter erkennbar, besteht der zweiteilige Lagerinnenring 2 aus den beiden Ringhälften 8, 9, die als Spritzgussteil hergestellt und formgleich, d. h., identisch ausgebildet sind und in der Trennebene 23 aneinander liegen. Jede Ringhälfte 8, 9 ist mit je zwei Verrastungsgliedern 10, 11 versehen, die an zwei gegenüberliegenden Umfangsstellen angeordnet sind, d. h., um 180° gegeneinander versetzt sind. Die Verrastungsglieder 10, 11 sind an dem Ringteil 27, 28 angeformt, wobei das Ringteil 27, 28 an einem Teil seiner Umfangsausdehnung von segmentartig und schalenförmig ausgebildeten Vorsprüngen 12, 13 in axialer Richt überragt ist. Die schalenartigen Vorsprünge 12, 13 sind dabei in Umfangsrichtung gegenüberliegend und in einer anderen Radialebene als die Ringteile 27, 28 angeordnet, d. h., sie liegen in radialer Richtung nach außen hinter den Ringteilen 27, 28. Beide Vorsprünge 12, 13 sind in Umfangsrichtung durch segmentartig ausgebildete Vertiefungen 14, 15 voneinander getrennt, wobei sich wiederum jeweils zwei gleiche Vertiefungen 14, 15 beider Ringhälften 8, 9 gegenüberliegen. Dabei wirken die beiden Ringhälften 8, 9 so zusammen, dass die Vorsprünge 12 der Ringhälfte 8 in die Vertiefungen 15 der Ringhälfte 9 und die Vorsprünge 13 der Ringhälfte 9 in die Vertiefungen 15 der Ringhälfte 8 eingreifen. Die Verrastungsglieder 10, 11 greifen dabei in je eine Freistellung 16, 17 ein, die im Ringteil 27, 28 angeordnet ist. Jede Ringhälfte 8, 9 ist mit einem radial nach außen gerichteten Flansch 18, 19 versehen, sodass mit dem Außenring 3 eine nicht näher bezeichnete Spaltdichtung gebildet ist.

Wie aus der vergrößerten Darstellung in Figur 1 a erkennbar, weist jedes Verrastungsglied 10, 11 je einen Haken 20, 21 auf, der radial nach außen gerichtet ist und dessen Verrastungsfläche unter einem Winkel α < 90° zur Lagerachse 22 verläuft und mit einer gleichgerichteten Verrastungsfläche der Freistellung 16, 17 zusammenwirkt. Auf diese Weise ist sichergestellt, dass beim Einschieben einer nicht dargestellten Welle in den zweiteilig ausgebildeten Lagerinnenring 2 die zunächst radial nach innen ausgerichteten Verrastungsglieder 10, 11 nach radial außen gedrückt werden und durch Zusammenwirken beider Verrastungsflächen die beiden Ringhälften 8, 9 in axialer Richtung aufeinander zubewegen, sodass diese fest aneinander liegen und auf diese Weise auf die Lagervorspannung eingewirkt werden kann.

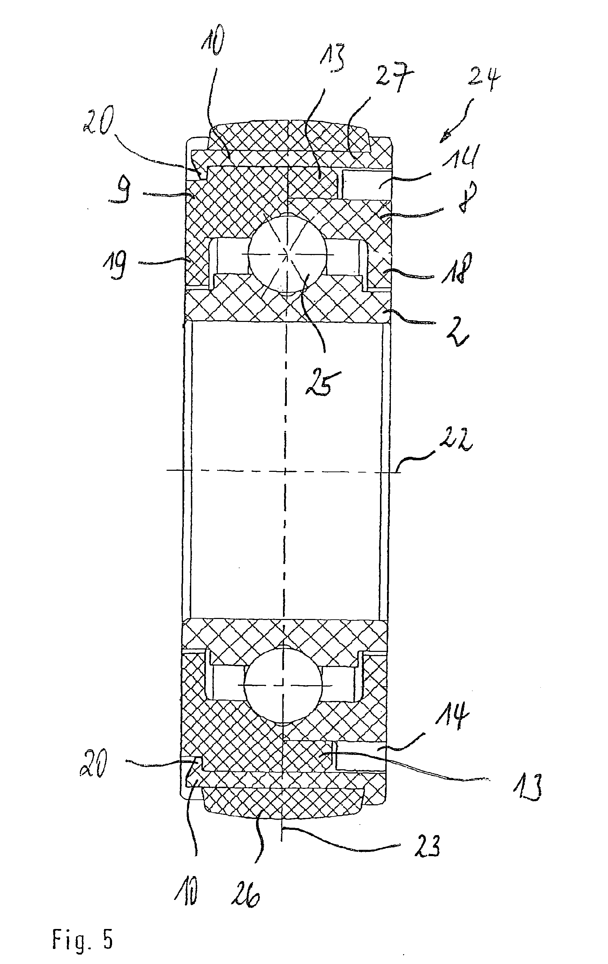

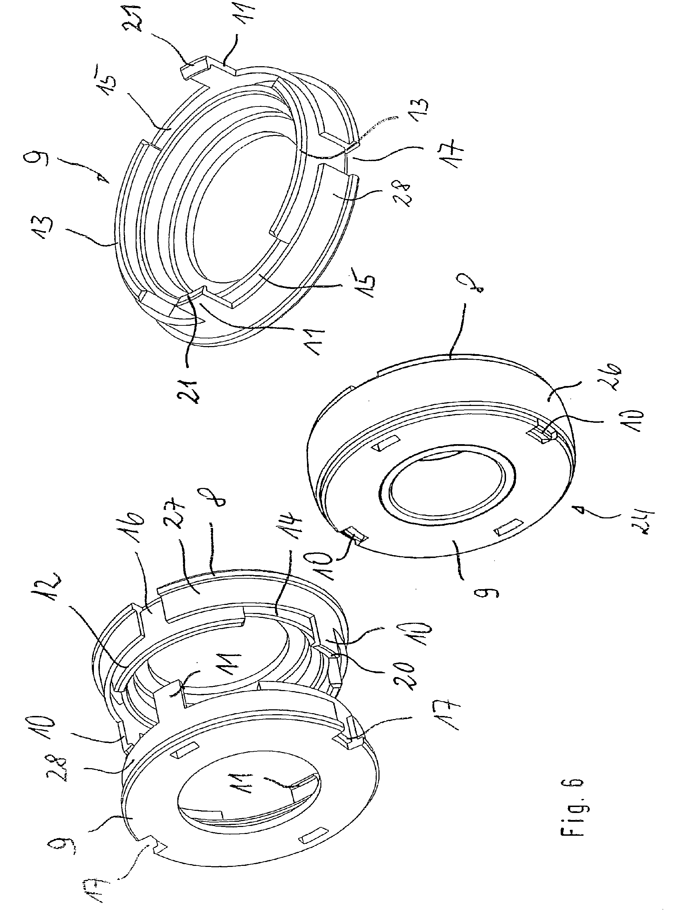

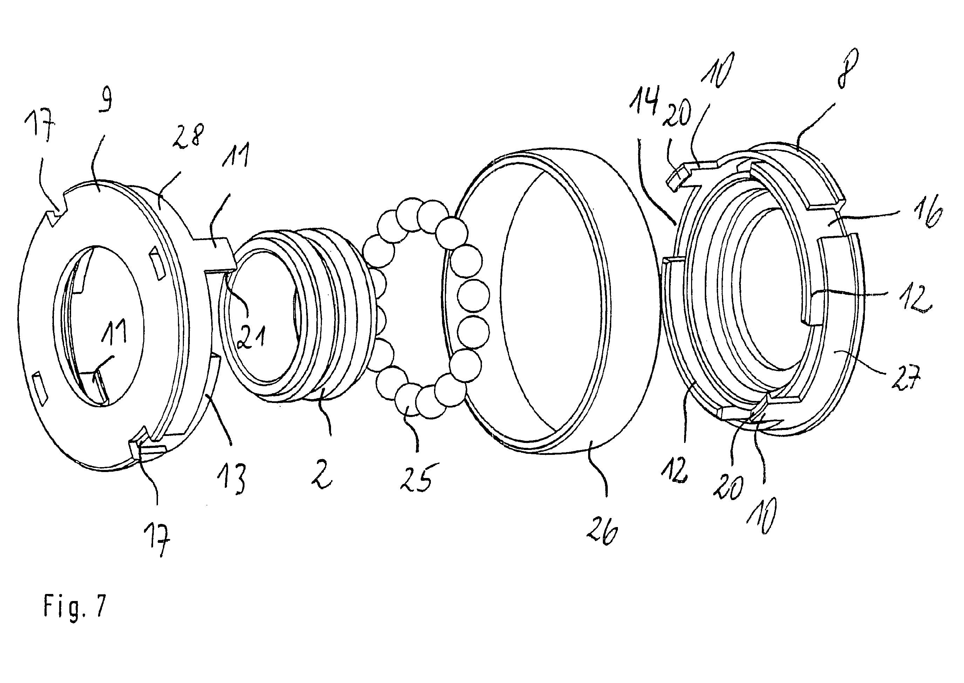

Das in den Figuren 5 bis 7 in seiner Gesamtheit und in seinen Einzelbestandteilen dargestellte Wälzlager 24 ist als Vierpunkt-Kugellager ausgebildet, dessen Lageraußenring 3 aus den beiden Ringhälften 8, 9 zusammengesetzt ist, die im montierten Zustand an der Trennebene 23 aneinander liegen. Wie erkennbar, sind an den Ringteilen 27, 28 einstückig die Verrastungsglieder 10, 11 angeformt, deren Haken 20, 21 radial nach innen gerichtet sind, wobei die Verrastungsglieder 10, 11 sich in Umfangsrichtung betrachtet gegenüberliegen. Die Ringteile 27, 28 sind an zwei gegenüberliegenden Umfangsstellen durch Freistellungen 16, 17 unterbrochen, in die Verrastungsglieder 11, 10 nach erfolgter Montage beider Ringhälften 8, 9 zur Anlage kommen. Die Ringteile 27, 28 werden an einem Teil ihrer Umfangsausdehnung von segmentartig und schalenförmig ausgebildeten Vorsprüngen 12, 13 in axialer Richtung überragt, wobei die Vorsprünge 12, 13 in einer anderen Radialebene angeordnet sind als die Ringteile 27, 28, d. h., die Vorsprünge 12, 13 sind gegenüber den Ringteilen 27, 28 radial nach innen versetzt. Es wirken wiederum die schalenartigen Vorsprünge 12 der Ringhälfte 8 mit den Vertiefungen 15 der Ringhälfte 9 und die schalenartigen Vorsprünge 13 der Ringhälfte 9 mit den Vertiefungen 14 der Ringhälfte 8 zusammen.

Die vorstehend beschriebenen und zeichnerisch dargestellten Wälzlager 1 und 24 sind in ihrer Gesamtheit aus Kunststoff gefertigt und sind insbesondere aufgrund ihrer Medienbeständigkeit und antimagnetischen Eigenschaften im medizinischen Bereich und der Lebensmittelindustrie gefragt. Sie weisen eine hohe Tragzahl und Laufruhe auf und lassen sich durch Spritzgusstechnologie in einfacher Weise herstellen, wobei ihr Design so gewählt ist, dass beide Ringhälften 8, 9 eine identische Form aufweisen und ohne Schieber in radialer Richtung entformbar sind, was ihre Herstellung wesentlich vereinfacht. Ein weiterer Vorteil ist dadurch gegeben, dass die Trennebene 23 beider Ringhälften 8, 9 außerhalb des Laufbahnbereiches der Wälzkörper 4, 5, 25 liegt, sodass sich an den Trennstellen unweigerlich ergebene Grate nicht überrollt werden. Es ist auch von Vorteil, dass die Verrastungsglieder 10, 11 die beiden identisch ausgebildeten Ringhälften 8, 9 zuverlässig und genau in einer entsprechend vorbestimmten Zuordnung zueinander halten. Weiter ist von Vorteil, dass durch die Flansche 18, 19 der Ringhälften 8, 9 eine Spaltdichtung gebildet ist, die lebensverlängernd wirkt. Bei Verwendung der Wälzlager 1, 24 als Rollen ist die spezielle Ausgestaltung der Verrastungsglieder 10, 11 von besonderer Bedeutung, da diese über ihre Schräge nach der Montage des Lagers 1, 24 auf einen Bolzen die Ringhälften 8, 9 axial zusammenschieben und somit das Lagerspiel einengen. Schließlich sorgen die elastische Ummantelung 26 und die O-Ringe 7 dafür, dass sich in Kombination mit einer weichen äußeren Lauffläche eine Rolle mit großer Tragfähigkeit und hoher Schwingungs- und Geräuschdämpfung ergibt.

### Bezugszeichen

- 1: zweireihiges Schrägkugellager
- 2: Lagerinnenring
- 3: Lageraußenring
- 4: Wälzkörper
- 5: Wälzkörper
- 6: Vorsprung
- 7: O-Ring
- 8: Ringhälfte
- 9: Ringhälfte
- 10: Verrastungsglied
- 11: Verrastungsglied
- 12: schalenartiger Vorsprung
- 13: schalenartiger Vorsprung
- 14: Vertiefung
- 15: Vertiefung
- 16: Freistellung
- 17: Freistellung
- 18: Flansch
- 19: Flansch
- 20: Haken
- 21: Haken
- 22: Lagerachse
- 23: Trennebene
- 24: Vierpunkt-Kugellager
- 25: Wälzkörper
- 26: Ummantelung
- 27: Ringteil
- 28: Ringteil

- α: Neigungswinkel

## Patentansprüche

1. Wälzlager (1, 24) mit einem Lagerinnenring (2) und einem Lageraußenring (3), von denen wenigstens einer als ein Kunststoff-Spritzgußteil ausgebildet ist und mit Wälzkörpern (4, 5, 25) , die auf einer Laufbahn des Lagerinnenringes (2) und auf einer Laufbahn des Lageraußenringes (3) abwälzen, wobei wenigstens einer der Lagerringe (2, 3) in einer achsnormalen Trennebene (23) in zwei formgleiche Ringhälften (8, 9) geteilt ist, die formschlüssig aneinander gehalten sind, wobei über die Trennebene (23) hinausragende an beiden Ringhälften (8, 9) einstückig angeformte, elastisch ausgebildete Verrastungsglieder (10, 11) mit in beiden Ringhälften (8, 9) angeordneten Freistellungen zusammenwirken, **dadurch gekennzeichnet, dass** die Verrastungsglieder (10, 11) an einem radial innen oder radial außen liegenden Ringteil (27, 28) angeformt sind, wobei das Ringteil (27, 28) an einem Teil seiner Umfangsausdehnung von segmentartig und schalenförmig ausgebildeten Vorsprüngen (12, 13) in axialer Richtung überragt wird, die in einer anderen Radialebene angeordnet sind, die Vorsprünge (12, 13) in Umfangsrichtung durch segmentartig ausgebildete Vertiefungen (14, 15) begrenzt sind und die Vorsprünge (12, 13) einer Ringhälfte (8, 9) in die komplementär ausgebildeten Vertiefungen (15, 14) der anderen Ringhälfte (9, 8) eingreifen, so dass sich Vorsprünge (12, 13) und Ringteil (28, 27) in axialer Richtung überdecken und die Verrastungsglieder (10, 11) der einen Ringhälfte (8, 9) in im anderen Ringteil (28, 27) angeordnete Freistellungen (17, 16) eingreifen.

2. Wälzlager (24) nach Anspruch 1, **dadurch gekennzeichnet, dass** der Lageraußenring (3) geteilt ist, wobei das Ringteil (27, 28) jeder Ringhälfte (8, 9) an zwei gegenüberliegenden Umfangsstellen mit Verrastungsgliedern (10, 11) versehen ist, die in die komplementär ausgebildeten Freistellungen (17, 16) der anderen Ringteile (28, 27) eingreifen und wobei beide Ringhälften (8, 9) in Umfangsrichtung um 90 ° zueinander versetzt angeordnet sind.

3. Wälzlager (24) nach Anspruch 2, **dadurch gekennzeichnet, dass** jede Ringhälfte (8, 9) mit einem radial nach innen gerichteten Flansch (18, 19) versehen ist, so dass mit dem Lagerinnenring (2) eine Spaltdichtung gebildet ist.

4. Wälzlager (24) nach Anspruch 2, **dadurch gekennzeichnet, dass** es als ein Vierpunkt-Kugellager ausgebildet ist, dessen Lagerkugeln (25) vollkugelig angeordnet sind.

5. Wälzlager (24) nach Anspruch 2, **dadurch gekennzeichnet, dass** beide Ringhälften (8, 9) an ihrer Außenmantelfläche zwischen sich eine elastisch ausgebildete Ummantelung (26) aufnehmen.

6. Wälzlager (1) nach Anspruch 1, **dadurch gekennzeichnet, dass** der Lagerinnenring (2) geteilt ist, wobei das Ringteil (27, 28) jeder Ringhälfte (8, 9) an zwei gegenüberliegenden Umfangsstellen mit Verrastungsgliedern (10, 11) versehen ist, die in die komplementär ausgebildeten Freistellungen (17, 16) der anderen Ringteile (28, 27) eingreifen, wobei beide Ringhälften (8, 9) in Umfangsrichtung um 90° zueinander versetzt angeordnet sind.

7. Wälzlager (1) nach Anspruch 6, **dadurch gekennzeichnet, dass** jede Ringhälfte (8, 9) mit einem radial nach außen gerichteten Flansch (18, 19) versehen ist, so dass mit dem Lageraußenring (3) eine Spaltdichtung gebildet ist.

8. Wälzlager (1) nach Anspruch 6, **dadurch gekennzeichnet, dass** es als ein zweireihiges Schrägkugellager ausgebildet ist, dessen Lagerkugeln (4, 5) vollkugelig angeordnet sind.

9. Wälzlager (1) nach Anspruch 6, **dadurch gekennzeichnet, dass** der Lageraußenring (3) mit wenigstens einer Ausnehmung versehen ist, in der ein O-Ring angeordnet ist.

10. Wälzlager (1) nach Anspruch 1, **dadurch gekennzeichnet, dass** das Verrastungsglied (10, 11) einen Haken (20, 21) aufweist, dessen Verrastungsfläche unter einem Winkel < 90° zu einer Lagerachse (22) verläuft und der mit einer gleich geneigten Verrastungsfläche der Freistellung (16, 17) zusammenwirkt.

11. Wälzlager (1, 24) nach Anspruch 1, **dadurch gekennzeichnet, dass** die Wälzkörper (4, 5, 25) aus einem nichtmetallischen Werkstoff gefertigt sind.

## Claims

1. Rolling bearing (1, 24) with a bearing inner ring (2) and a bearing outer ring (3), at least one of which is formed as a plastics injection molding, and with rolling elements (4, 5, 25), which roll on a raceway of the bearing inner ring (2) and on a raceway of the bearing outer ring (3), at least one of the bearing rings (2, 3) being split in an axially normal parting plane (23) into two ring halves (8, 9) of identical shape, which are held against one another with a form fit, elastically formed latching members (10, 11) which protrude beyond the parting plane (23) and are formed in one piece on both ring halves (8, 9) interacting with clearances arranged in both ring halves (8, 9), **characterized in that** the latching members (10, 11) are formed on a radially inner or radially outer ring part (27, 28), segment-like and shell-shaped projections (12, 13) projecting in the axial direction beyond the ring part (27, 28) at a part of the circumferential extent thereof, and said projections (12, 13) being arranged in a different radial plane and being delimited in the circumferential direction by segment-like depressions (14, 15), and the projections (12, 13) of one ring half (8, 9) engaging in the depressions (15, 14) of a complementary form of the other ring half (9, 8), so that the projections (12, 13) and the ring part (28, 27) overlap in the axial direction and the latching members (10, 11) of one ring half (8, 9) engage in clearances (17, 16) arranged in the other ring part (28, 27).

2. Rolling bearing (24) according to Claim 1, **characterized in that** the bearing outer ring (3) is split, the ring part (27, 28) of each ring half (8, 9) being provided at two opposing circumferential points with latching members (10, 11) which engage in the clearances (17, 16) of a complementary form of the other ring parts (28, 27) and the two ring halves (8, 9) being arranged offset in relation to one another in the circumferential direction by 90°.

3. Rolling bearing (24) according to Claim 2, **characterized in that** each ring half (8, 9) is provided with a radially inwardly directed flange (18, 19), so that a gap seal is formed with the bearing inner ring (2).

4. Rolling bearing (24) according to Claim 2, **characterized in that** it is formed as a four-point ball bearing, the bearing balls (25) of which are arranged as a full complement.

5. Rolling bearing (24) according to Claim 2, **characterized in that** the two ring halves (8, 9) receive an elastically formed casing (26) between them at their outer circumferential surface.

6. Rolling bearing (1) according to Claim 1, **characterized in that** the bearing inner ring (2) is split, the ring part (27, 28) of each ring half (8, 9) being provided at two opposing circumferential points with latching members (10, 11) which engage in the clearances (17, 16) of a complementary form of the other ring parts (28, 27) and the two ring halves (8, 9) being arranged offset in relation to one another in the circumferential direction by 90°.

7. Rolling bearing (1) according to Claim 6, **characterized in that** each ring half (8, 9) is provided with a radially inwardly directed flange (18, 19), so that a gap seal is formed with a bearing outer ring (3).

8. Rolling bearing (1) according to Claim 6, **characterized in that** it is formed as a double-row angular ball bearing, the bearing balls (4, 5) of which are arranged as a full complement.

9. Rolling bearing (1) according to Claim 6, **characterized in that** the bearing outer ring (3) is provided with at least one recess in which an O-ring is arranged.

10. Rolling bearing (1) according to Claim 1, **characterized in that** the latching member (10, 11) has a hook (20, 21), the latching area of which runs at an angle of < 90° with respect to a bearing axis (22) and which interacts with an identically inclined latching area of the clearance (16, 17).

11. Rolling bearing (1,24) according to Claim 1, **characterized in that** the rolling elements (4, 5, 25) are produced from a nonmetallic material.

## Revendications

1. Roulement (1, 24) avec une bague de roulement intérieure (2) et une bague de roulement extérieure (3), dont au moins une est une pièce moulée par injection en matière plastique, et avec des éléments roulants (4, 5, 25), qui roulent sur un chemin de roulement de la bague de roulement intérieure (2) et sur un chemin de roulement de la bague de roulement extérieure (3), dans lequel au moins une des bagues de roulement (2, 3) est divisée en deux moitiés de bague (8, 9) de même forme dans un plan de séparation (23) normal à l'axe, qui sont maintenues en emboîtement l'une sur l'autre, dans lequel des organes de verrouillage (10, 11) de nature élastique, formés d'une pièce sur les deux moitiés de bague (8, 9) et saillants au-delà du plan de séparation (23), coopèrent avec des dégagements pratiqués dans les deux moitiés de bague (8, 9), **caractérisé en ce que** les organes de verrouillage (10, 11) sont formés sur une partie de bague (27, 28) située radialement à l'intérieur ou radialement à l'extérieur, dans lequel la partie de bague (27, 28) est dépassée en direction axiale, sur une partie de son extension périphérique, par des saillies (12, 13) réalisées à la manière de segments et en forme de coquilles, qui sont disposées dans un autre plan radial, les saillies (12, 13) sont limitées en direction périphérique par des creux (14, 15) réalisés à la manière de segments et les saillies (12, 13) d'une moitié de bague (8, 9) s'engagent dans les creux de forme complémentaire (15, 14) de l'autre moitié de bague (9, 8), de telle manière que les saillies (12, 13) et la partie de bague (28, 27) se recouvrent en direction axiale et que les organes de verrouillage (10, 11) de la première moitié de bague (8, 9) s'engagent dans des dégagements (17, 16) pratiqués dans l'autre partie de bague (28, 27).

2. Roulement (24) selon la revendication 1, **caractérisé en ce que** la bague de roulement extérieure (3) est divisée, dans lequel la partie de bague (27, 28) de chaque moitié de bague (8, 9) est munie, en deux points opposés de la périphérie, d'organes de verrouillage (10, 11), qui s'engagent dans les dégagements de forme complémentaire (17, 16) des autres parties de bague (28, 27) et dans lequel les deux moitiés de bague (8, 9) sont disposées avec un décalage de 90° l'une par rapport à l'autre en direction périphérique.

3. Roulement (24) selon la revendication 2, **caractérisé en ce que** chaque moitié de bague (8, 9) est munie d'un flasque (18, 19) orienté radialement vers l'intérieur, de telle manière qu'un joint à labyrinthe soit formé avec la bague de roulement intérieure (2).

4. Roulement (24) selon la revendication 2, **caractérisé en ce qu'**il est constitué par un roulement à billes à quatre points, dont les billes de roulement (25) sont disposées en une ligne de billes complète.

5. Roulement (24) selon la revendication 2, **caractérisé en ce que** les deux moitiés de bague (8, 9) contiennent entre elles, sur leur surface latérale extérieure, une enveloppe (26) de nature élastique.

6. Roulement (1) selon la revendication 1, **caractérisé en ce que** la bague de roulement intérieure (2) est divisée, dans lequel la partie de bague (27, 28.) de chaque moitié de bague (8, 9) est munie, en deux points opposés de la périphérie, d'organes de verrouillage (10, 11), qui s'engagent dans les dégagements de forme complémentaire (17, 16) des autres parties de bague (28, 27) et dans lequel les deux moitiés de bague (8, 9) sont disposées avec un décalage de 90° l'une par rapport à l'autre en direction périphérique.

7. Roulement (1) selon la revendication 6, **caractérisé en ce que** chaque moitié de bague (8, 9) est munie d'un flasque (18, 19) orienté radialement vers l'extérieur, de telle manière qu'un joint à labyrinthe soit formé avec la bague de roulement extérieure (3).

8. Roulement (1) selon la revendication 6, **caractérisé en ce qu'**il est constitué par un roulement à billes à contacts obliques à deux rangées, dont les billes de roulement (4, 5) sont disposées en lignes de billes complètes.

9. Roulement (1) selon la revendication 6, **caractérisé en ce que** la bague de roulement extérieure (3) est munie d'au moins un évidement, dans lequel un joint torique est disposé.

10. Roulement (1) selon la revendication 1, **caractérisé en ce que** l'organe de verrouillage (10, 11) présente un crochet (20, 21), dont la face de verrouillage forme un angle < 90° avec un axe de roulement (22) et qui coopère avec une face de verrouillage de même inclinaison du dégagement (16, 17).

11. Roulement (1, 24) selon la revendication 1, **caractérisé en ce que** les éléments roulants (4, 5, 25) sont fabriqués en un matériau non métallique.
